# EUROPEAN PATENT APPLICATION

(11) **EP 1 361 756 A1**
(43) Date of publication of application: **12.11.2003**
(21) Application number: 02010591.2
(22) Date of filing: 10.05.2002
(51) Int. Cl.: H04N 7/24

(54) **Method and/or system for transferring/receiving audio and/or video signals and minimizing delay time over internet networks and relating apparatuses**

(71) Applicant: MAYAH Communications GMBH, 85399 Hallbergmoos (DE)
(72) Inventor: Wiese, Detlef, 85354 Freising (DE); Rimkus, Joerg, 24943 Flensburg (DE)
(74) Representative: Dini, Roberto, Dr. Ing.

(57) **Abstract**

The present invention refers to a method and/or a system for transferring/receiving audio and/or video signals and minimizing delay time over Internet networks comprising the steps of
on the transmitting side:
- Converting, if available in analog form, audio and/or video input signal in digital form by means of an A/D converter;
- processing the digital audio and/or video signal in order to manipulate, control, adapt or change it;
- converting the sampling rate of the digital audio and/or video signal for adapting the digital input clock to the network clock or for adapting the A/D clock to the network clock resulting in an clock-adapted digital signal;
- encoding the clock-adapted digital signal for reducing the number of bits resulting in a lower bit rate encoded signal;
- multiplexing the encoded signal and packing it into a resulting multiplexed signal which needs to comply with the used and/or applied network interface;
- putting the multiplexed signal in a network;
- analysing the active network interface or verifies which network interface is receiving and/or sending data;
on the reception side:
- analysing the active network interface or verifying which network interface is receiving and/or sending data;
- taking the multiplexed signal from the network and providing it to a bitstream analyser (13);
- analysing the multiplexed signal in order to de-multiplex the signal for obtaining an encoded signal;
- decoding the encoded signal into a digital audio and/or video signal;
- converting the sampling rate of the digital audio and/or video signal for adapting the network clock to the digital output clock or to adapt the network clock to the D/A converter clock and resulting in a clock-adapted digital signal;
- processing the clock-adapted digital signal to manipulate, control, adapt or change it;
- converting in analog form the digital audio and/or video signal by means of an D/A converter;
characterised in that, for reducing the delay time of the digital audio and/or video signal transfer, the IP packets generated by bitstream generating means (8) are optimised by minimizing the packet sizeand low delay coding algorithm are chosen by encoding means (6)..

## Description

The present invention refers to a method and/or system for transferring audio and/or video signals and minimizing delay time over Internet networks.

It is known that Internet network is used for transferring several kinds of information among which also audio and/or video signals.

Today the transmission of audio as well as video signals via the Internet is known as being very slow, delayed and un-reliable.

E.g. web radio is not matching the quality of today broadcast listeners in FM or Digital Radio services. The overall delay in web radio some times can be higher than several seconds. Furthermore the audio quality is depending on the available network capacity. If too many users are using the Internet, the audio signal transfer may be interrupted.

Due to such results, professional audio and video broadcasting does not use IP (Internet Protocol) network for professional applications, in particular it avoids to use IP for live transmissions.

Aim of the present invention is to overcome the above described drawbacks and improving the quality of the transfer of audio and video signals over IP network by minimizing delay time and reducing the bandwidth requested.

For achieving such aims the present invention has as its object a method and apparatuses for transferring audio and/or video signals and minimizing delay time over Internet networks, having the distinctive features described in claim 1 and further defined by sub-claims.

Further aims and advantages of said invention will result in being clearer from the detailed description that follows and annexed drawing supplied as an explicative and non-limiting example.

Only for practical reasons, the example described refers to a method of transmission and reception of audio signals over Internet Protocol networks but the same principles are applicable also to video signals.

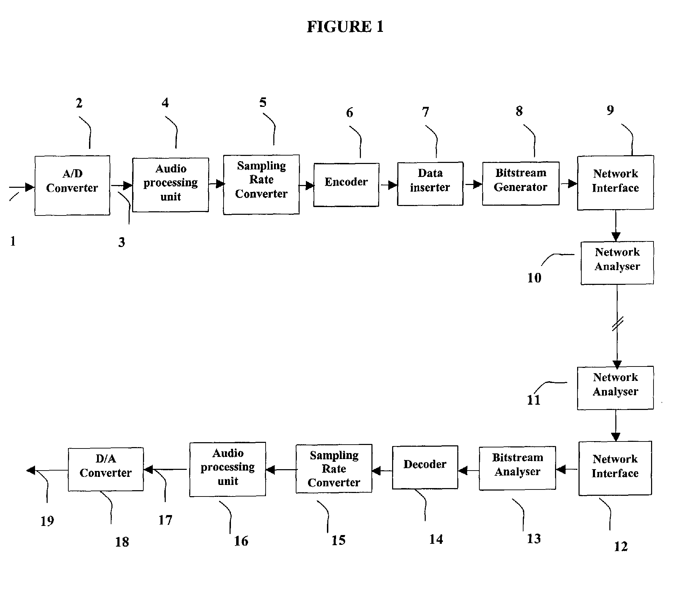

Figure 1 represents a block diagram of a transmission and receiving system of audio signals according to the invention.

The system consists of the following parts which may be set in sequence or in another order to define certain applications, where,
on transmitting side:
- With number 1 is indicated an analog audio input signal, mono or stereo,
- With 2 is indicated an A/D converter converting the analog signal into a digital signal when analog inputs are used;
- With 3 is indicated a digital audio input signal, mono or stereo or multi-channel 5.1, or 7.1 or similar, which is the result of the A/D conversion or a direct digital input; when digital inputs are used the A/D converter 2 is not used;
- With 4 is indicated an audio processing unit able to manipulate, control, adapt or change the digital audio signal;
- With 5 is indicated a sampling rate converter needed for adapting the digital input clock to the network clock or for adapting the A/D clock to the network clock resulting in an clock-adapted digital signal;
- With 6 is indicated an Encoder(s) to encode the digital signal, for instance, into a linear, perceptual-coded or non-perceptual-coded format for reducing the number of bits resulting in a lower bit rate encoded signal; the choice of the coding algorithm and the setting of some parameters, such as frame length, bit rate and sampling rate, etc., is performed with the aim to reduce the delay time of the transmission over IP networks;
- With 7 is indicated a data inserter which may be used to insert additional data, either within the encoded signal or in a separated stream; alternatively the data inserter may be used to replace less significant bits of the encoded signal with such additional data (i.e. in the way described in German patent application DE 44 30 864);
- With 8 is indicated a bitstream generator to multiplex the encoded signals and/or data signals and/or the hidden data signals and to pack them into a resulting multiplexed signal which needs to comply with the used and/or applied network interface; the obtained packet data shall be opportunely sized so that the delay time in the transmission is reduced;
- With 9 is indicated a network interface which puts the multiplexed signals in the network;
- With 10 is indicated a network analyser which analyses the active network interface or verifies which network interface is receiving and/or sending data;
on receiving side:
- With 11 is indicated a network analyser which analyses the active network interface or verifies which network interface is receiving and/or sending data;
- With 12 is indicated a network interface which takes the multiplexed signal from the network and provides it to a bitstream analyser 13;
- With 13 is indicated the bitstream analyser which analyses the multiplexed signal in order to de-multiplex the signal for obtaining an encoded signal;
- With 14 is indicated a Decoder(s) to decode the encoded signal into a digital signal; said decoder shall be able to decode the same coding scheme used in the transmitting side, for instance a linear, perceptual-coded or non-perceptual-coded format;
- With 15 is indicated a sampling rate converter needed for adapting the network clock to the digital output clock or to adapt the network clock to the D/A converter clock and resulting in a clock-adapted digital signal;
- With 16 is indicated an audio processing unit able to manipulate, control, adapt or change the digital audio signal;
- With 17 is indicated a digital audio output signal, mono or stereo or multi-channel 5.1, or 7.1 or similar, which results the replica of the digital audio input signal 3;
- With 18 is indicated a D/A converter converting the digital audio signal into a analog audio signal;
- With 19 is indicated an analog audio output signal, mono or stereo, which results the replica of the analog audio input signal 1.

The characteristics of the described methods, object of the present invention, result clear from the present description and annexed drawing.

The advantages of the method object of the present invention also become clearer from the description.

They consist in the fact that from the encoding part of the system the encoded signal and/or data signal and/or the hidden data signal are packed by the bitstream generator into IP datagrams, which constitute the above said multiplexed signal encoded with the aim to reduce the delay time of the transmission over IP networks. An IP datagram always includes an header, with synchronization, delivering and system information, which represents an overhead. Said overhead being higher when more-significant short packets are used or transmitted and being lower when less-significant longer packets are used or transmitted.

In particular, the IP packet generated by the bitstream generator 8 is optimised by minimizing the packet size for the TCP (transfer control protocol) or UDP (user datagram protocol) packages.

Further advantages are represented by determined choices carried out inside the encoder 6. For instance, low delay coding algorithm may be chosen or other parameters may be set with the aim to reduce the delay time, namely a small frame length, an high bit rate and an high sampling rate.

Such parameter setting allows the user to control the coding delay time versus quality and bit rate and similar parameters and can include an automatic calculation to reach lowest delay or lowest bandwidth. This is considered to be a great benefit.

The same situation is obtained in the receiving part of the system with the use of devices that are mirroring the encoding/transmitting part.

It also clear that numerous variants can be supplied by the skilled man to the method and/or system for transferring/receiving audio and/or video signals and minimizing delay time over Internet networks and relating apparatuses described as an example, without however departing from the novelty principles inherent in the present invention.

## Claims

1. Method for transferring/receiving audio and/or video signals and minimizing delay time over Internet networks comprising the steps of:
On the transmitting side:
- Converting, if available in analog form, audio and/or video input signal in digital form by means of an A/D converter;
- processing the digital audio and/or video signal in order to manipulate, control, adapt or change it;
- converting the sampling rate of the digital audio and/or video signal for adapting the digital input clock to the network clock or for adapting the A/D clock to the network clock resulting in an clock-adapted digital signal;
- encoding the clock-adapted digital signal for reducing the number of bits resulting in a lower bit rate encoded signal;
- multiplexing the encoded signal and packing it into a resulting multiplexed signal which needs to comply with the used and/or applied network interface;
- putting the multiplexed signal in a network;
- analysing the active network interface or verifies which network interface is receiving and/or sending data;
on the reception side:
- analysing the active network interface or verifying which network interface is receiving and/or sending data;
- taking the multiplexed signal from the network and providing it to a bitstream analyser (13);
- analysing the multiplexed signal in order to de-multiplex the signal for obtaining an encoded signal;
- decoding the encoded signal into a digital audio and/or video signal;
- converting the sampling rate of the digital audio and/or video signal for adapting the network clock to the digital output clock or to adapt the network clock to the D/A converter clock and resulting in a clock-adapted digital signal;
- processing the clock-adapted digital signal to manipulate, control, adapt or change it;
- converting in analog form the digital audio and/or video signal by means of an D/A converter;
**characterised in that**, for reducing the delay time of the digital audio and/or video signal transfer, the IP packets generated by bitstream generating means (8) are optimised by minimizing the packet sizeand low delay coding algorithm are chosen by encoding means (6)..

2. Method for transferring/receiving audio and/or video signals according to claim 1, **characterised in that** a data inserter (7) is used to insert additional data, either within the encoded signal or in a separated stream, or, alternatively, used to replace less significant bits of the encoded signal with such additional data;

3. Apparatus for the transmission of audio and/or video signals and minimizing delay time over Internet networks implementing the method as defined in one or more of the preceding claims.

4. Apparatus for the reception of audio and/or video signals and minimizing delay time over Internet networks implementing the method as defined in one or more of the preceding claims.

5. System for transferring/receiving audio and/or video signals and minimizing delay time over Internet networks implementing the method as defined in one or more of the preceding claims.

6. Encoded signal according to claims 1 or 2 **characterised in that** is obtained by a low delay coding algorithm and that is coded with a small frame length, an high bit rate and an high sampling rate.

7. Multiplexed signal according to claims 1 or 2 **characterised in that** the IP packet has the minimum packet size.

8. Decoded signal according to claims 1 or 2 **characterised in that** is obtained by decoding a low delay algorithm and a small frame length, an high bit rate and an high sampling rate.

9. Demultiplexed signal according to claim 1 or 2 **characterised in that** the IP packet has the minimum packet size.
